# EUROPEAN PATENT SPECIFICATION

(11) **EP 2 338 591 B1**
(45) Date of publication and mention of the grant of the patent: **19.06.2019**
(21) Application number: 09179933.8
(22) Date of filing: 18.12.2009
(51) Int. Cl.: B01J 21/06, B01J 21/10, B01J 23/28, B01J 23/30, B01J 37/02, B01D 53/00, B01J 20/00

(54) **DEACTIVATION-RESISTANT MGO / V2O5-(MO3 OR WO3) /TIO2 CATALYST FOR SELECTIVE CATALYTIC REDUCTION OF NOX**
DEAKTIVIERUNGSBESTÄNDIGER MGO / V2O5-(MO3 OR WO3) /TIO2 KATALYSATOR ZUR SELEKTIVEN KATALYTISCHEN NOX-REDUKTION
CATALYSEUR MGO / V2O5-(MO3 OR WO3) /TIO2 RÉSISTANT À LA DÉSACTIVATION POUR LA RÉDUCTION CATALYTIQUE SÉLECTIVE DE NOX

(43) Date of publication of application: 29.06.2011
(73) Proprietor: Umicore AG & Co. KG, 63457 Hanau-Wolfgang (DE)
(72) Inventor: Jensen, Anker Degn, 4060, Kirke Saaby (DK); Castellino, Francesco, 1752, Copenhagen V (DK); Rams, Per Donskov, 2860, Søborg (DK); Pedersen, Jannik Blaabjerg, 1355, Copenhagen K (DK); Putluru, Siva Sankar Reddy, 2950, Vedbæk (DK)

(56) References cited:
- EP-A1- 1 358 933
- EP-A1- 2 165 763
- EP-A2- 0 277 706
- WO-A1-2009/001891
- US-A- 3 990 998
- US-A1- 2003 072 914
- US-A1- 2009 253 941

## Description

The present invention relates to a novel catalyst for selective catalytic reduction of NOₓ in alkali metal containing flue gas.

Energy production by firing of organic material such as coal, oil, gas or biomass usually results in the production of undesired air pollutants such as NOₓ (NO and NO₂). These are emitted into the environment as part of the resulting flue/exhaust streams. Combustion-derived NOₓ contributes to ground-level ozone formation, photochemical smog and acid rain, thereby deteriorating soils and damaging forests. NOₓ also constitutes a direct health concern as it may impact the human immune system, e.g. through formation of toxic organic nitrates. NO₂ reacts in the air to form nitric acid which is highly corrosive to building materials. In addition, NOₓ is believed to contribute to the depletion of stratospheric ozone. Consequently, the emission of NOₓ into the atmosphere is subject to stringent government regulations.

Selective catalytic reduction (SCR) by ammonia (NH₃) is a widely used industrial process for reducing NOₓ emission from flue gas of stationary power units. In SCR, NOₓ is catalytically reduced to N₂ in the presence of oxygen with ammonia being added as the reducing agent. The injected ammonia reacts selectively with NOₓ at temperatures above about 230 ºC in the presence of oxygen. The removal efficiency of SCR of NOₓ may be about 70-98%. For the reduction of NO, the following general stoichiometry applies:

4NO + 4NH₃ + O₂ → 4N₂ + 6H₂O (1)

Mechanistically, the SCR reaction with NOₓ and NH₃ is usually regarded as a process where ammonia adsorbs onto the catalyst surface whereupon NO reacts from the gas phase or as weakly adsorbed species.

In known SCR systems, there are three general classes of catalysts: precious-metal catalysts for operation at low temperatures, base metals for operation at medium temperatures, and zeolites for operation at higher temperatures. Base metal catalysts are often based on vanadium, for example as vanadium pentoxide (V₂O₅), which may be supported on titanium dioxide, TiO₂, and promoted with tungsten or molybdenum oxides. Examples of SCR catalyst compositions for NOₓ reduction are V₂O₅-MoO₃-TiO₂ or V₂O₅-WO₃-TiO₂. For SCR with base metal catalysts, the most efficient reduction of NOₓ is usually observed at operation temperatures of 300 - 450 ºC. The choice of a suitable SCR catalyst for NOₓ conversion typically depends on the temperature of the exhaust gas to be treated. It also usually depends on the amount of SO₂ and SO₃ present in the flue gas. Vanadium-based catalysts can in fact oxidise SO₂ to SO₃. This latter can react with NH₃ to from ammonium bisulfate, which may cause fouling and plugging of the catalyst.

EP-A-1 358 933 relates to a catalyst used for exhaust gas purification and NOx removal for an internal combustion engine. The catalytically active components may comprise alkaline metals or alkaline-earth metals such as sodium potassium, lithium, cesium, strontium or barium, in the form of oxides together with at least one noble metal or rare earth metal. To suppress sintering and migration of the metals outside the carrier and into the substrate, the catalysts comprise an anchoring material, which preferably is MgO. The catalyst is thus made up of a substrate, which is coated with a carrier containing an anchoring material such as MgO, which subsequently is impregnated with the catalytically active component.

US 3,990,998 relates to a ruthenium catalyst system for treatment of waste gases and NOx removal. The problem addressed by US 3,990,998 A is the prevention of ruthenium oxide formation at high temperatures. The solution is a system where a core is coated first with AI203, then with MgO, and finally with catalytic quantities of Ru. Similar to EP 1 358 933, it teaches the application of MgO onto or into the carrier system followed by coating/impregnating with the catalytically active components

US 2009/253941 discloses a micro channel device with a supported formaldehyde synthesis catalyst for converting methanol to formaldehyde. The catalyst may be produced by impregnating a MoO/TiO2 powder with a vanadium-containing aqueous solution, followed by calcination. Subsequently, iron is added by ion exchange using a FeCl2 solution, resulting in a final Fe2O3 content of 2%.

WO-A-2009/001891 mentions that catalysts composed of titanium oxide carrying active components such as vanadium (V), molybdenum (Mo), or tungsten (W) oxides have been widely used as flue gas denitration catalysts. Their degradation is caused by, for example, the deterioration of the denitration activity due to the adhesion of dust components derived from the gas, for example, alkali metal elements such as potassium and sodium, alkaline earth metal elements such as calcium, and volatile compounds such as arsenic, lead, and phosphorus. The solution of this problem is to regenerate catalysts poisoned by inter alia CaO by immersing a spent denitration catalyst in a phosphate ion containing aqueous solution, and then drying the catalyst.

A significant problem with SCR is catalyst deactivation caused by alkali metals such as potassium (K) or sodium (Na) that are present, for example, in flyash. Catalyst deactivation by chemical poisoning becomes manifest in decreased catalytic activity and selectivity. A highly undesired result of decreased catalytic activity is the release of excess NH₃ from the SCR rector. Excess NH₃ can result in formation of ammonium bisulfate which may cause fouling of downstream equipment.

Deactivation by alkali metals is in particular observed when treating flue gas stemming from the firing of biomass. The latter is becoming increasingly popular in view of its even CO₂ balance. A high level of alkali metals is typically also observed in waste incineration plants. In the combustion of biomass, alkali metals are usually present as aerosols. The deactivation of the catalyst is believed to be mainly caused by potassium nanoparticles. These particles are produced during the combustion of biomass by the decomposition and subsequent condensation of potassium compounds at high temperatures.

Biomass such as straw or woodchips may contain up to 2 wt% potassium and may result in a high content of flyash. The potassium content in such flyash may be up to 40 wt%. Both factors contribute to an increased deactivation of SCR catalysts when treating flue gas from burned biomass. For purely biofired units, alkali metal poisoning has so far been an obstacle for SCR installation in the high-dust position, which is an SCR configuration that has the advantage of not requiring particulate emissions control prior to the NOₓ reduction process.

Catalyst poisoning by alkali metals and alkaline earth metals usually depends on the basicity of the metal, which leads to the following sequence of deactivation potential K > Na > Ca. Hence, deactivation is proportional to the basicity, which makes potassium particles, such as potassium oxides, the main culprit. Cs and Rb have an even higher deactivation potential, however, these metals do not usually occur in substantial amounts in firing materials.

Deactivation by potassium relates to the loss of Brønsted acid sites (V-OH groups) and to the decreased activity of the Lewis acid sites (V=O groups) of vanadium oxide based SCR catalysts. Alkali metals bind to the ammonia adsorption sites resulting in a permanent deactivation of the catalyst. The poisoning mechanism is believed to be a reaction of the V-OH groups with a potassium compound, such as K₂O where the hydrogen atom is replaced by potassium. Subsequently, potassium atoms may diffuse into the catalyst to bind to new Bronsted acid sites whereby the initial site may be attacked by another potassium atom. Similarly, potassium cations may associate with several Lewis acid sites on the catalytic surface. Overall, the deactivation mechanism is believed to include the steps of (i) deposition of alkali-containing flyash on the catalyst surface, (ii) reaction between the alkali metal and the catalytic surface resulting in bonding of alkali metal to the catalyst surface, and (iii) diffusion of alkali metal atoms into the catalyst following the concentration gradient.

Another aspect of alkali metal poisoning is the typically observed shift of the maximum catalytic activity towards lower temperatures, which complicates the overall operation procedure of SCR systems treating biomass exhaust gas.

Known attempts at minimising alkali metal deactivation of SCR catalysts include the addition of SO₂ to the flue gas stream. The acidity of the injected SO₂ is believed to regenerate Bronsted acid sites. Also, it has been suggested to use alternative support materials other than TiO₂, such as Zr(SO₄)₂ or sulphated zirconium dioxide (ZrO₂) with either sulphate or tungsten as an additive. These approaches focus on enhancing the acidity of the catalyst and/or its carrier, which thus appears to be a prejudice in the art.

It has also been proposed to increase the number of catalytically active vanadium sites in order to decrease the relative influence of the deposited alkali metals. In view of the comparatively high price of vanadium, this strategy is not very cost-efficient. Furthermore, the addition of vanadium results in an increased activity only when a monolayer of vanadium oxide is formed on the support, meaning that the available surface area of the support is limiting this practice.

International Patent Application No. WO/2008/037255 relates to the selective removal of NOₓ from flue gas originating from the burning of biomass, combined biomass and fossil fuel, and from waste incineration units, i.e. gases containing a significant amount of alkali metal and/or alkali-earth compounds. The proposed SCR catalyst comprises a formed porous superacidic support, a metal oxide catalytic component selected from the group consisting of Cu, V, Fe, Cr, Mn, and any mixtures thereof, deposited on said support. The superacidic support is produced by depositing acid sulphates such as sulphuric acid onto ZrO₂, SnO₂, TiO₂, Al₂O₃ or Fe₂O₃. This is time-consuming and can hardly be applied to existing catalysts, where the support is already covered with the catalytic components.

Consequently, it is a first object of the present invention to provide a catalyst with an improved resistance to alkali poisoning during selective catalytic reduction of NOₓ using ammonia as the reductant.

It is a second object of the present invention to provide a catalyst with an increased catalyst lifetime for selective catalytic reduction of NOₓ using ammonia as the reductant.

It is a third object of the present invention to provide a cost-effective and easily manufacturable catalyst for selective catalytic reduction of NOₓ using ammonia as the reductant.

It is a fourth object of the present invention to provide a catalyst for selective catalytic reduction of NOₓ using ammonia as the reductant, said catalyst being resistant to alkali poisoning without the need of injecting further reactants to the flue gas.

It is a fifth object of the present invention to provide a catalyst suitable for SCR installation in the high-dust position on biofired power units.

The new and unique way of addressing one or more of the above-mentioned objects is to provide a catalyst for selective catalytic reduction of NOₓ in alkali metal containing flue gas using ammonia as reductant, the catalyst being defined as in the claims.

As used herein, the term "vanadium-based catalyst" refers to a catalyst that comprises one or more vanadium containing compounds, such as vanadium oxides, as catalytic components for ammonia adsorption and NOₓ reduction. A preferred example is V₂O₅. As used herein, the term "basic metal oxides" refers to metal oxides that form hydroxides or dissolve by forming basic aqueous solutions when reacting with water. Examples of basic metal oxides include MgO, CaO, BaO, SrO or lanthanide oxides. Of the divalent oxides, it is found that basicity increases as expected in the order MgO < CaO < SrO < BaO. An example of an oxide not falling within this definition of "basic metal oxides" is V₂O₅, which is an acid oxide.

As used herein, the term "catalytically active sites" refers to the Bronsted (proton donor) and Lewis (electron acceptor) acid sites on the catalyst for adsorption of ammonia. For catalysts comprising V₂O₅, the Bronsted acid sites correspond to V-OH groups and the Lewis acid sites correspond to V=O.

As used herein, the term "fully coated" refers to a situation where at least 98% of the catalyst surface with catalytically active sites (e.g. V-OH or V=O) is coated with a coating comprising one or more metal oxides.

As used herein, the term "uncoated catalyst" refers to a catalyst where the surface containing the catalytically active sites (for example V-OH and/or V=O) is uncoated and thereby directly exposed to the surroundings.

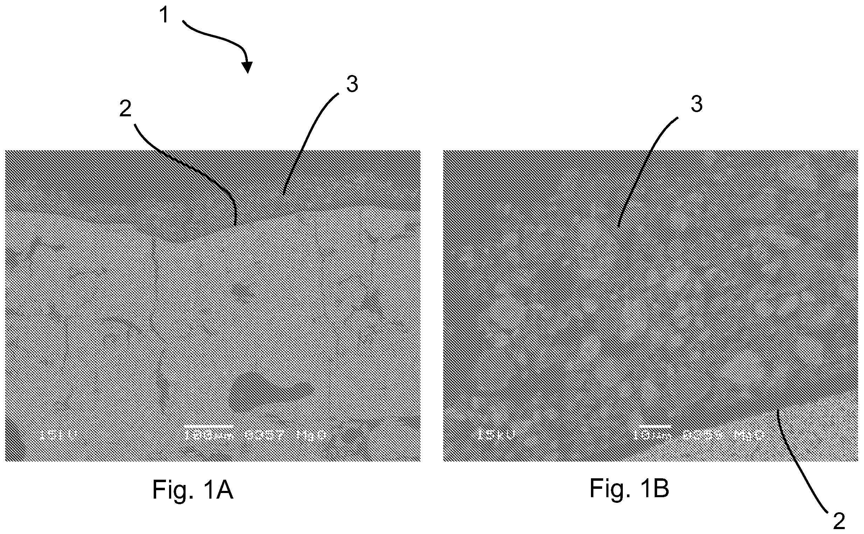

Figure 1 shows two scanning electron microscopy (SEM) images of a cross section of a coated catalyst according to the present invention. The SEM images were taken by using a thin carbon coating. The left image (Fig. 1A) represents a magnification of x150, while the right image (Fig. 1B) represents a magnification of x1000.

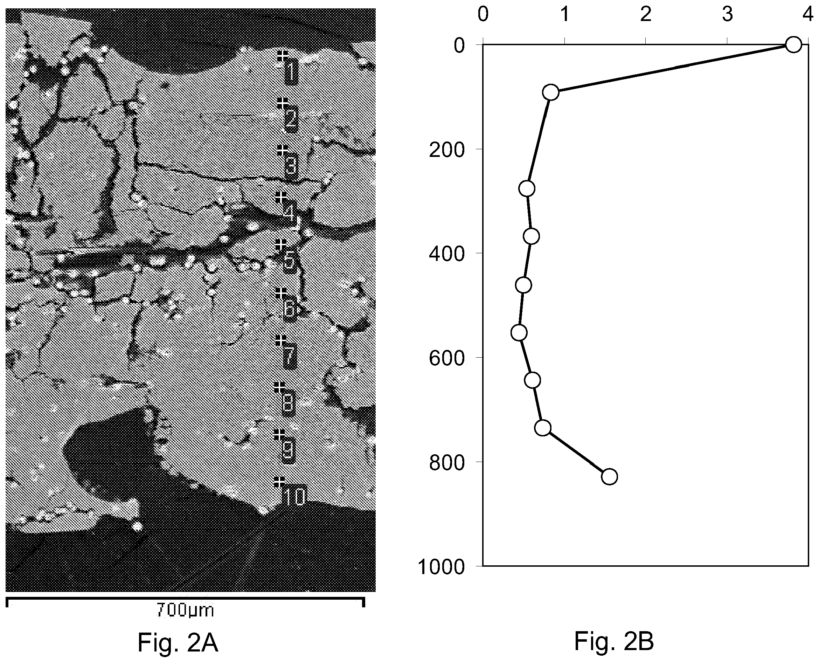

Figure 2 shows an SEM image of a cross section of a non-coated catalyst (comparative) after exposure to KCl nanoparticles (Fig. 2A). Ten points along the cross section were analysed with EDX resulting in the potassium concentrations (in wt%) shown in Fig. 2B (the abscissa represents weight percentages of potassium, while the ordinate represents the distance in µm).

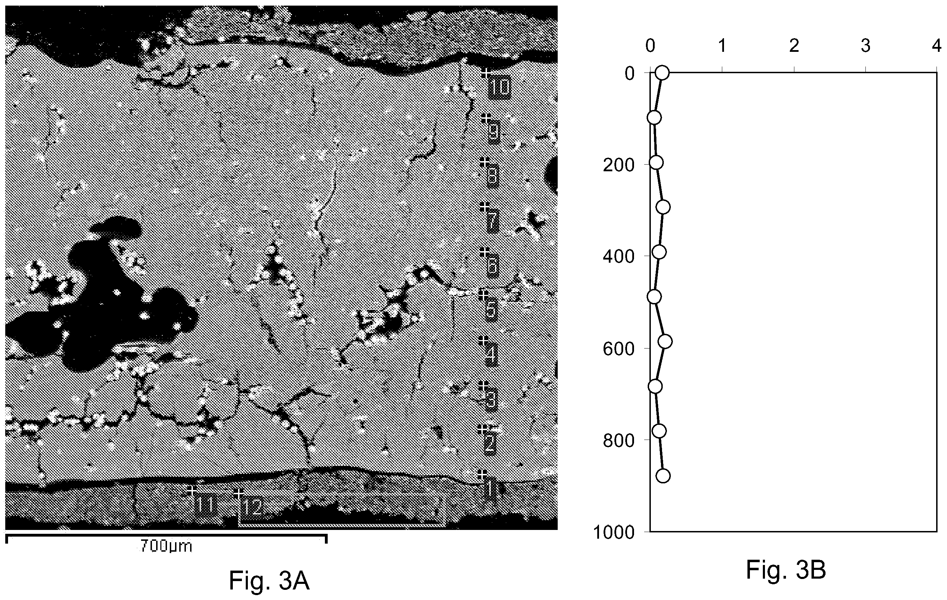

Figure 3 shows an SEM image of a cross section of a coated catalyst according to the present invention after exposure to KCl nanoparticles (Fig. 3A). Ten points along the cross section were analysed with EDX resulting in the potassium concentrations (in wt%) shown in Fig. 3B (the abscissa represents weight percentages of potassium, while the ordinate represents the distance in µm).

Since the surface with catalytically active sites (for example V-OH and/or V=O) is partly or fully coated with the coating comprising MgO, it is evident that the coated part of the surface with the catalytically active sites is no longer directly exposed to the surroundings, i.e. is no longer a free surface. The actual free face of a fully coated catalyst according to the present invention would then obviously be constituted by the outer side of the coating.

The inventive catalyst leads to surprisingly slow rates of alkali deactivation even at full biomass firing. As described above, the alkali poisoning mechanism for known vanadium-based SCR catalysts is believed to involve an acid-base interaction between the catalytic surface (acid) and alkali metals such as potassium (base). The catalyst according to the present invention thus provides a coating comprising metal oxides which is believed to (i) exhibit a lower degree of reaction with alkali metals derived from flyash and to (ii) prevent migration of alkali metals to the active sites of the catalyst. Without wishing to be bound by theory, it is believed that the degree of the acid-base reaction is the decisive parameter for deactivation. Preventing this reaction from taking place by using metal oxides presents a breakthrough in producing alkali-poisoning resistant SCR catalysts. It is believed that potassium atoms are stable in the flyash particle or form a K-O complex at the surface of the metal oxide layer, which substantially leads to immobilization of potassium.

The coating should be thin enough to allow cross-layer diffusion of NH₃ and NOₓ towards the active sites of the catalyst. While potassium is substantially prevented from crossing the coating layer, NH₃ and NOₓ advantageously travel across the coating to the catalytically active sites where the actual reduction of NOₓ takes place.

The layer may cover the surface with the catalytically active sites fully or partly. The latter may be useful when a catalyst with a high initial activity together with a satisfactory long term resistance to alkali poisoning is required. Since the coating may reduce the activity of the catalyst to some degree, as compared to an uncoated reference catalyst, it may be desired to keep part of the surface area uncoated. However, even a fully coated catalyst has surprisingly been found to exhibit only a minor reduction in activity, which is a reasonable trade-off in view of the improved deactivation resistance.

The inventive catalyst may be a monolithic catalyst. The catalyst may be of the extruded honeycomb type, the plate catalyst type, or the corrugated plate catalyst type.

As described above, the prior art suggests that acid support materials such as superacidic ZrO₂ lead to a better resistance against alkali metal poisoning of the catalyst. However, it has now surprisingly been observed that in particular a MgO coating confers an improved resistance to alkali poisoning on the catalyst. For known uncoated catalysts, the poisoning reaction is essentially an acid-base interaction, where the catalytic surface represents the acid and the alkali metal represents the base. By providing the catalyst with a MgO layer this type of interaction is believed to be minimal, resulting in an improved resistance to deactivation by alkali metals.

MgO is highly refractory and non-toxic. In addition, MgO is cheap and readily available in large quantities. Furthermore, MgO exhibits advantageous properties with respect to porosity and gas permeability of the coating. MgO layers were observed to readily permit cross-layer transport of NOₓ and NH₃ while at the same time efficiently retaining alkali atoms.

According to another embodiment of the present invention, the surface is fully coated with the coating. The advantage of this is a complete protection of the catalytically active sites which gives a better long-term resistance to alkali poisoning as compared to a catalyst with a partly coated surface.

According to another embodiment of the present invention, the coating further comprises one or more coating additives. Thereby, the adherence of the coating to the surface containing the catalytically active sites may be improved. Possible additives include oxides of titanium, chromium and manganese. Other possible additives include boron, clay minerals, feldspar or ZnO. These may reduce crazing of, for example, MgO coatings.

According to a preferred embodiment of the present invention, the coating additive comprises one or more boron compounds. The boron compound may, for example, be boric acid or a boron oxide such as boric anhydride (B₂O₃). Boron compounds are believed to minimise crazing of the catalyst coating. Boron compounds are also believed to improve the conditions of sintering providing a liquid phase at the grain boundaries and improving chemical bonding. Boron may be present in the coating at a concentration of 1-5 wt%.

According to another embodiment of the present invention, the coating has a thickness of 1-100 µm. This range of coating thickness is believed to present a satisfactorily thin diffusion barrier for gaseous NOₓ and NH₃, while being able to retain potassium lest it reach the catalytically active sites. It was surprisingly observed that the coated catalyst with this thickness range may retain up to 80% of its original, non-coated activity. Even more preferably the coating has a thickness of 30-70 µm.

The catalyst comprises either (i) V₂O₅ and MoO₃ on TiO₂ or (ii) V₂O₅ and WO₃ on TiO₂. A useful composition for the present invention is 5 wt% V₂O₅, 9 wt% WO₃ and the remainder TiO₂ (anatase) reinforced with fibre material.

The inventive catalyst may be advantageously incorporated into an SCR reactor. The reactor may be of the monolith reactor type, the parallel plate type or the lateral flow reactor type.

In another embodiment of the present invention, the catalyst comprises zeolites of structure type BEA, MFI loaded with metal, preferentially Fe and Cu.

The flue gas may originate from the firing of biomass. Biomass may include tree and grass crops, wood, waste material from agriculture, forestry or industry, or urban wastes. The firing of biomass may also include co-firing of biomass and, for example, coal.

According to an embodiment, the coating of the support with the second aqueous suspension is carried out by a spraying method selected from air-atomized spraying, air-assisted spraying, airless spraying, high volume low pressure spraying, and air-assisted airless spraying. Coating by a spraying method, for example air atomized spraying using a spray gun, resulted in a particularly thin coating layer while the original surface structure of the catalyst could still be observed. The thin coating layer, which is preferably between 1-100 µm, allows for an efficient transport of gaseous NOₓ and NH₃ across the coating.

Alternatively, the coating of the support with the second aqueous suspension is carried out by a wash-coating method.

### Example 1: Catalyst coating

1.7 x 1.7 cm² (0.3 g) catalyst plates from Haldor Topsøe A/S were used. The composition of the catalyst was 1.2 wt% V₂O₅, 7 wt% WO₃ and TiO₂ (anatase) reinforced with fibre material. The fibre material mainly consisted of SiO₂ with alumina and calcium as minor components. The catalyst plates were coated with an aqueous MgO suspension containing 15-30 mass percent dry matter. The coating was applied with a spray gun at 1.5 bar and a nozzle diameter of 0.5 mm, the nozzle held at a distance of 30-35 cm from the catalyst plate. The average particle diameter in the applied MgO suspension was about 22 µm. Coated plates were subsequently calcinated for four hours at 500 ºC. The average thickness of the MgO coating was 64 µm. An exemplary SEM image of the coated catalyst 1 is shown in Figs. 1A and 1B. Both magnifications in Fig. 1 show the surface 2 with catalytically active sites, which is coated with the MgO-coating 3.

### Example 2: Exposure to potassium nanoparticles

Both a coated catalyst and a non-coated reference catalyst were exposed to potassium nanoparticles at pilot plant scale. The pilot plant was operated at a burner temperature of 1100 ºC. An aqueous potassium chloride (7.4 g/L) was injected into the burner over a period of 648 hours at a flow rate of about 400 mL/h. The tested catalysts were exposed to the potassium containing exhaust stream at a temperature of 350 ºC and a flow of 40 Nm³/h (Nm³/h is equal to m³/h at standard conditions). Thus, each catalyst was exposed to a KCl nanoparticle concentration of about 53 mg/Nm³.

### Example 3: Determination of catalytic activity

Catalytic activity was determined in a quartz reactor with the catalyst plates resting on a frit. The flow was held constant at 3 L/min with concentrations of about 370 ppm NO, 500 ppm NH₃, 5 vol% O₂ and 1.4 vol% H₂O. All measurements were conducted at a temperature of 350 ºC. The rate constant for the reduction of NO with NH₃ was calculated via the measured consumption of NO. Catalytic activity was tested for three different types of plate: (i) non-coated catalyst plates (comparative), (ii) coated catalyst plates, and (iii) KCl-exposed coated catalyst plates. This way it was possible to evaluate the effect of the coating as such, the effect of the potassium exposure, and the overall effect (coating + KCl-exposure).

The coating with MgO, as described above, resulted in an average decrease of catalytic activity on the order of 20%. This loss is ascribed to the necessity of NOₓ and NH₃ to diffuse through the coating layer prior to reaction at the active sites of the catalyst. Thus, about 80% of the original activity was maintained for the coated catalyst before exposure to KCl. After exposure to KCl-nanoparticles (see above) the catalytic activity of the coated catalyst according to the present invention was reduced by about 25% relative to the activity of the coated, non-exposed catalyst. However, the KCl-exposed, non-coated catalyst (comparative) exhibited a decrease in catalytic activity of about 75% relative to the non-exposed, non-coated reference (comparative). With regard to the combined effect of the coating and the KCl-exposure it was found that the inventive catalyst retained about 60% of its initial activity whereas the non-coated reference catalyst (comparative) retained only about 25% of its initial activity after KCl-exposure. This clearly demonstrates the superior properties of the coated catalyst according to the present invention with respect to resistance to potassium poisoning.

### Example 4: Elemental analysis

Energy dispersive X-ray (EDX) analysis was used for investigating the elemental composition of a cross section of a MgO-coated catalyst according to the present invention as well as of a non-coated reference catalyst. For this purpose, the catalysts were epoxy impregnated under vacuum and subsequently polished with a Struer Rotoforce-4 polishing station (5 Newton). After KCl-exposure the non-coated reference catalyst (comparative) had a surface potassium concentration of 6-25 wt% whereas the MgO-coated catalyst according to the present invention had an average surface potassium concentration of 19-26% (the term "surface" relates here to the surface of the coating).

A cross-sectional concentration profile of potassium after KCl exposure is shown in Fig. 2B for the non-coated reference catalyst (comparative). A steep concentration gradient of potassium can be observed on both sides of the catalyst plate with high potassium levels at the catalyst surface which rapidly drop at a depth of 100 µm and deeper. The same analysis was done for the MgO-coated catalyst according to the present invention. A cross-sectional profile of the catalyst plate (excluding the coating) was analysed for potassium (Fig. 3B). The profile is essentially constant with depth. All measure potassium concentrations were below the measurement background noise, indicating that it is safe to assume that potassium is substantially absent. This finding demonstrates that potassium does not reach the actual catalyst due to the inventive coating.

Potassium levels in the coating were analyzed for areas 11 and 12 in Fig. 3A. The measured potassium levels on and within the coating were around 5 wt%. Apparently, the coating efficiently retains potassium atoms. A concentration profile across the inventive coating showed a substantially linear decrease of potassium levels from the surface of the coating to the coating/catalyst interface (not shown).

## Claims

1. A catalyst (1) for selective catalytic reduction of NOₓ in alkali metal containing flue gas using ammonia as reductant, the catalyst (1) comprising either (i) V2O5 and MoO3 on TiO2 or (ii) V2O5 and WO3 on TiO2 and a surface (2) with catalytically active sites comprising V-OH or V=O , **characterised in that** the surface (2) is at least partly coated with a coating (3) comprising MgO.

2. A catalyst according to claim 1, **characterised in that** the surface (2) is fully coated with the coating (3).

3. A catalyst according to claim 1 or 2, **characterised in that** the coating (3) has a thickness of 1-100 µm.

4. A catalyst according to any one of the preceding claims, **characterised in that** the catalyst comprises zeolites of structure type BEA, MFI loaded with Fe or Cu

## Patentansprüche

1. Katalysator (1) zur selektiven katalytischen Reduktion von NOₓ in Alkalimetall enthaltendem Abgas unter Verwendung von Ammoniak als Reduktionsmittel, wobei der Katalysator (1) entweder (i) V2O5 und MoO3 auf TiO2 oder (ii) V2O5 und WO3 auf TiO2 und eine Oberfläche (2) mit katalytisch aktiven Stellen, umfassend V-OH oder V=O, umfasst, **dadurch gekennzeichnet, dass** die Oberfläche (2) mindestens teilweise mit einer Beschichtung (3) beschichtet ist, die MgO umfasst.

2. Katalysator nach Anspruch 1, **dadurch gekennzeichnet, dass** die Oberfläche (2) vollständig mit der Beschichtung (3) beschichtet ist.

3. Katalysator nach Anspruch 1 oder 2, **dadurch gekennzeichnet, dass** die Beschichtung (3) eine Dicke von 1-100 µm aufweist.

4. Katalysator nach einem der vorhergehenden Ansprüche, **dadurch gekennzeichnet, dass** der Katalysator Zeolithe des Strukturtyps BEA, MFI, beladen mit Fe oder Cu, umfasst

## Revendications

1. Catalyseur (1) pour la réduction catalytique sélective de NOₓ dans un gaz de combustion contenant un métal alcalin en utilisant de l'ammoniac en tant que réducteur, le catalyseur (1) comprenant soit (i) V2O5 et MoO3 sur TiO2, soit (ii) V2O5 et WO3 sur TiO2 et une surface (2) avec des sites catalytiquement actifs comprenant V-OH ou V=O, **caractérisé en ce que** la surface (2) est au moins partiellement revêtue d'un revêtement (3) comprenant MgO.

2. Catalyseur selon la revendication 1, **caractérisé en ce que** la surface (2) est complètement revêtue avec le revêtement (3).

3. Catalyseur selon la revendication 1 ou 2, **caractérisé en ce que** le revêtement (3) a une épaisseur de 1 à 100 µm.

4. Catalyseur selon l'une quelconque des revendications précédentes, **caractérisé en ce que** le catalyseur comprend des zéolites de type de structure BEA, MFI chargé avec Fe ou Cu
